# EUROPÄISCHE PATENTSCHRIFT

(11) **EP 2 043 430 B1**
(45) Veröffentlichungstag und Bekanntmachung des Hinweises auf die Patenterteilung: **10.11.2010**
(21) Anmeldenummer: 08784902.2
(22) Anmeldetag: 19.07.2008
(51) Int. Cl.: A01M 1/22, A01M 3/00

(54) **VORRICHTUNG ZUR VERNICHTUNG VON UNGEZIEFER**
ARRANGEMENT FOR DESTROYING VERMIN
DISPOSITIF DE DESTRUCTION DE LA VERMINE

(30) Priorität: 25.07.2007 DE 102007035152; 08.01.2008 DE 102008003394
(43) Veröffentlichungstag der Anmeldung: 08.04.2009
(73) Patentinhaber: Schmitt, Robert, 97422 Schweinfurt (DE)
(72) Erfinder: Schmitt, Robert, 97422 Schweinfurt (DE)
(74) Vertreter: Gosdin, Michael
(86) Internationale Anmeldenummer: PCT/EP2008/005932
(87) Internationale Veröffentlichungsnummer: WO 2009/012948

(56) Entgegenhaltungen:
- EP-A- 1 040 756
- WO-A-94/23632
- GB-A- 2 346 062
- US-A- 5 452 539
- US-A- 5 926 997
- US-A1- 2005 028 428

## Beschreibung

Die Erfindung betrifft eine Vorrichtung zur Vernichtung von Ungeziefer.

In vielen Ländern ist die Belästigung durch Ungeziefer an der Tagesordnung. Dabei sind vor allem Schaben bzw. Kakerlaken störend, da sie mitunter Krankheiten übertragen oder dem Menschen auch Stiche zufügen können.

Die Vernichtung von Ungeziefer mit Giften hat nicht nur negative Begleitumstände zur Folge, da das Gift auch in Organismen gelangen kann, die nicht geschädigt werden sollen. Darüber hinaus sind auch schon Resistenzen beobachtet worden, die Ungeziefer entwickeln, so dass das Gift wirkungslos bleibt.

Das Töten des Ungeziefers mit mechanischen Mitteln hat gleichermaßen Nachteile und ist im übrigen sehr unhygienisch.

Wie Ungeziefer von entsprechend ausgebildeten Vorrichtungen eingesaugt und getötet werden kann, zeigen beispielsweise die US 5,926,997, die GB 2 346 062 A, die WO 94/23632, die US 5,452,539**,** die EP 1 040 756 A1 und die US 2005/0028428 A1**,** wobei auch eine Abtötung durch Hitze vorgeschlagen wird.

Der Erfindung liegt daher die **Aufgabe** zugrunde, eine Vorrichtung zur Vernichtung von Ungeziefer, insbesondere Schaben und Kakerlaken, zu schaffen, die die genannten Nachteile nicht aufweist. Das Ungeziefer soll zuverlässig getötet und hygienisch entsorgt werden. Ferner soll sich die Vorrichtung durch eine effiziente Arbeitsweise auszeichnen.

Die **Lösung** dieser Aufgabe durch die Erfindung ist dadurch gekennzeichnet, dass die Vorrichtung aufweist:
- eine Einrichtung zur Erzeugung einer Luftströmung in einem Förderkanal, wobei der Förderkanal an einem Ende eine Ansaugöffnung für Ungeziefer aufweist,
- ein Filterelement, das im Förderkanal angeordnet ist, wobei das Filterelement ausgebildet ist, um Ungeziefer zurückzuhalten und Luft passieren zu lassen, und wobei im Bereich des Filterelements eine Abgabeöffnung für Ungeziefer vorhanden ist, und
- mindestens eine Strahlungseinrichtung und/oder mindestens eine Heizeinrichtung zum Aussenden einer das Ungeziefer abtötenden Strahlung, wobei die Strahlungseinrichtung und/oder die Heizeinrichtung zwischen der Ansaugöffnung und dem Filterelement entlang des Förderkanals oder in einem hieran angrenzenden Bereich angeordnet ist,
wobei zwischen der Ansaugöffnung und dem Filterelement ein Förderelement angeordnet ist, das zur Förderung von Ungeziefer zur Abgabeöffnung ausgebildet ist, und wobei das Förderelement als mechanisches Förderelement in Form einer Förderschnecke ausgebildet ist, die in einem Gehäuse angeordnet ist.

Für die Ausbildung der Strahlung- bzw. Heizeinrichtung stehen mehrere Möglichkeiten zur Verfügung, die sich auch in der Kombination sehr bewährt haben.

Die Strahlungseinrichtung ist bevorzugt ein elektromagnetische Wellen erzeugendes Element. Dabei ist besonders bevorzugt an ein Mikrowellen erzeugendes Element gedacht.

Als Strahlungseinrichtung kann alternativ oder additiv auch eine Rotlicht emittierende Lampe eingesetzt werden.

Die Heizeinrichtung kann alleine oder in Kombination mit einer Strahlungseinrichtung eingesetzt werden. Als Heizeinrichtung kann ein ohmscher Widerstand zum Einsatz kommen. Dieser ist gemäß einer Ausgestaltung der Erfindung als Heizspirale ausgebildet.

Die Einrichtung zur Erzeugung einer Luftströmung ist vorzugsweise eine Staubsauger-Saugeinheit.

Das Filterelement kann als Lochblech ausgebildet sein. In diesem Falle hat es sich bewährt, wenn vorgesehen wird, dass das Lochblech Bohrungen aufweist, die einen Durchmesser zwischen 1 mm und 4 mm haben. Möglich ist es natürlich auch, dass als Filterelement ein Gewebefilter eingesetzt wird, das vorzugsweise auswechselbar ist.

Im Bereich der Abgabeöffnung für Ungeziefer kann ein Auffangbehälter für Ungeziefer angeordnet sein.

Die Förderschnecke besteht dabei vorzugsweise aus keramischem Material, um problemlos Mikrowellenstrahlung oder auch Hitzestrahlung zu widerstehen.

Das Förderelement fördert gemäß einer bevorzugten Ausführungsform der Erfindung das Ungeziefer in eine Richtung quer zur Strömungsrichtung der Luftströmung im Förderkanal.

Die Strahlungseinrichtung bzw. Heizeinrichtung ist dabei bevorzugt um das Förderelement herum angeordnet. Die Strahiungseinrichtung bzw. Heizeinrichtung kann dabei außerhalb des Förderkanals benachbart zu diesem angeordnet sein.

Im Förderkanal kann nahe der Ansaugöffnung ein Sperrelement angeordnet werden, das den Austritt von Ungeziefer aus dem Förderkanal verhindert. Entsprechend kann weiter vorgesehen sein, dass in Richtung der Luftströmung im Endbereich des Förderkanals ein Sperrelement angeordnet ist, das den Austritt von Ungeziefer aus dem Förderkanal verhindert. Das Sperrelement weist nach einer bevorzugten Ausgestaltung eine Anzahl federvorgespannter Lamellen auf, die zusammen einen Verschluss des Förderkanals bilden.

Die vorgeschlagene Vorrichtung kann als mobile Einheit ausgebildet sein. In diesem Falle ist es von Vorteil, wenn sie eine Batterie zur Versorgung der Einrichtung zur Erzeugung einer Luftströmung und der Strahlungseinrichtung bzw. Heizeinrichtung umfasst. Weiterhin hat es sich bewährt, wenn vorgesehen ist, dass die Vorrichtung Riemen zum Tragen auf dem Rücken nach Art eines Rucksacks aufweist.

Alternativ kann die Vorrichtung auch als stationäre Einheit ausgebildet sein. Hierbei sieht eine spezielle Lösung vor, dass die Vorrichtung Bestandteil einer Einbaustaubsaugeranlage ist.

Die Ansaugöffnung ist vorzugsweise zum Anschluss eines flexiblen Staubsaugerschlauchs ausgebildet, mit dem das Ungeziefer eingesaugt werden kann.

Mit der vorgeschlagenen Vorrichtung ist es möglich, auch größere Mengen an Ungeziefer schnell und zuverlässig zu vernichten. Durch den Aufbau der Vorrichtung kann das Ungeziefer hygienisch in die Vorrichtung eingesaugt und nach der Abtötung in einen Auffangbehälter verbracht werden.

Das Gerät ist flexibel einsetzbar, wenn es als mobile Einheit ausgebildet ist. Es ist aber auch möglich, das Gerät als stationäre Einheit vorzusehen, wozu die Vorrichtung in eine Zentralstaubsaugeranlage eines Gebäudes integriert werden kann.

Wesentlich ist, dass die Vorrichtung mindestens eine Strahlungseinrichtung und/oder mindestens eine Heizeinrichtung umfasst, mit denen Strahlung im weitesten Sinne erzeugt und auf das Ungeziefer gelenkt werden kann. Bei dieser Strahlung kann es sich um Mikrowellenstrahlung oder um Wärmestrahlung handeln, deren Intensität in jedem Falle so gewählt ist, dass eine schnelle Tötung des Ungeziefers erfolgt.

In der Zeichnung sind Ausführungsbeispiele der Vorrichtung zur Vernichtung von Ungeziefer dargestellt. Es zeigen:
- Fig. 1: die Schnittdarstellung einer Vorrichtung zur Vernichtung von Ungeziefer, wobei die benötigten Teile teilweise nur sehr schematisch dargestellt sind, und
- Fig. 2: die Schnittdarstellung einer weiteren Vorrichtung, die erfindungsgemäß ein Förderelement zum Fördern von Ungeziefer aufweist.

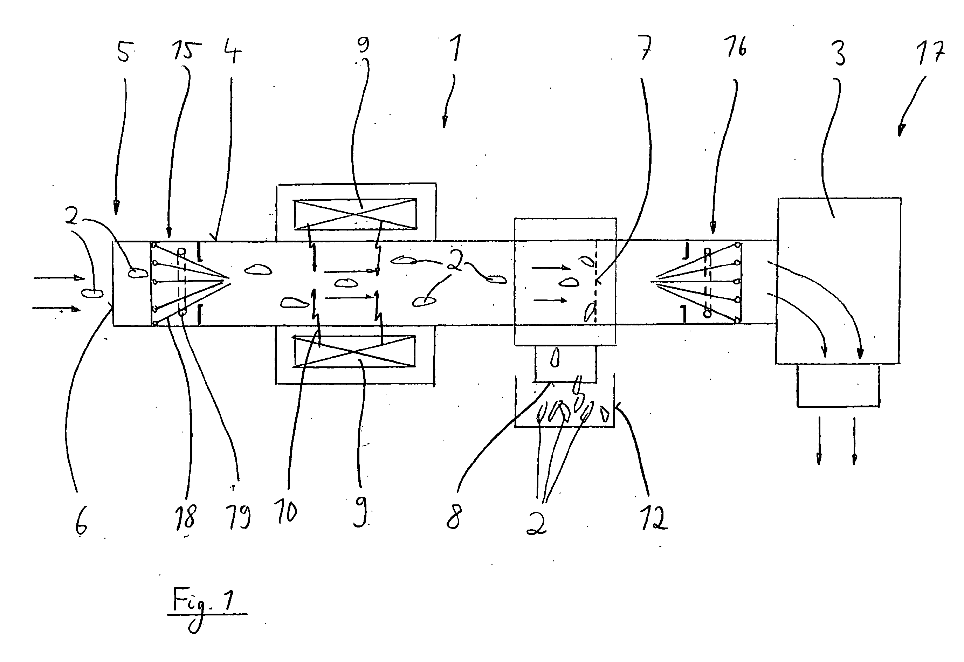

In Fig. 1 ist eine Vorrichtung 1 zur Vernichtung von Ungeziefer 2 zu sehen, wobei das Ungeziefer nur sehr schematisch dargestellt ist. Es handelt sich hierbei zumeist um Kakerlaken bzw. Schaben, die in einfacher und effizienter Weise vernichtet werden sollen. Typische Größen und Gewichte der Kakerlaken sind 10 bis 50 mm Länge und bis 5 Gramm Gewicht.

Die Vorrichtung 1 weist im Ausführungsbeispiel einen sich längs erstreckenden Förderkanal 4 auf. Es kann genauso aber auch vorgesehen sein, dass der Förderkanal 4 gebogen ausgeführt ist oder einen mäanderförmigen Verlauf hat. An geeigneter Stelle ist am bzw. im Förderkanal 4 eine Einrichtung 3 zur Erzeugung einer Luftströmung angeordnet. Bei dieser Einrichtung 3 handelt es sich um eine Saugeinheit eines Staubsaugers, wie sie als solche bekannt ist. Im vorliegenden Falle ist die Einrichtung 3 am hinteren Ende 17 des Förderkanals 4 positioniert. Grundsätzlich kann die Einrichtung 3 an beliebiger Stelle im Förderkanal 4 positioniert werden. Die Luftströmung, die durch den Betrieb der Einrichtung 3 erzeugt wird, ist schematisch durch Pfeile angedeutet.

Am vorderen Ende 5 des Förderkanals befindet sich eine Ansaugöffnung 6, über die Luft eingesaugt wird, wobei durch den Luftstrom Ungeziefer 2 mitgerissen wird. Im Förderkanal 4 befindet sich ein Filterelement 7, das im einfachsten Falle aus einem Lochblech bestehen kann, in das Löcher mit einem Durchmesser von ca. 2 bis 4 mm eingearbeitet sind. Der Durchmesser der Löcher ist so gewählt, dass die Luft problemlos das Filterelement 7 passieren kann, dass jedoch das Ungeziefer 2 zuverlässig zurückgehalten wird.

Das Filterelement kann natürlich auch aus klassischem Filtermaterial bestehen, das auswechselbar in dem Förderkanal 4 angeordnet ist. Das Auswechseln des Filtermaterials dient der Hygiene.

Nahe des Filterelements 7 und namentlich unter demselben ist im Förderkanal 4 eine Abgabeöffnung 8 für Ungeziefer 2 angeordnet. Unterhalb der Abgabeöffnung 8 ist ein Auffangbehälter 12 angeordnet, in dem Ungeziefer 2 aufgenommen werden kann.

Damit Ungeziefer 2, das in den Förderkanal 4 eingesaugt ist, in keinem Falle wieder aus dem Förderkanal 4 entkommen kann, sind Sperrelemente 15 und 16 vorgesehen. Es handelt sich im Ausführungsbeispiel um Elemente nach Art einer Reuse. Es ist eine Anzahl Lamellen 18 vorgesehen, die um den Umfang des vorzugsweise im Querschnitt kreisförmigen Förderkanals 4 angeordnet sind, wobei die Lamellen 18 mit einer Feder 19 so vorgespannt sind, dass im unbelasteten Zustand das Sperrelement 15, 16 den Förderkanal 4 abschließt. Allerdings kann dennoch Luft das Sperrelement 15, 16 passieren. Die Auslegung der Feder 19 ist dabei so gewählt, dass im Falle, dass Ungeziefer 2 angesaugt wird, die Lamellen 18 elastisch auffedern und dem Ungeziefer 2 den Eintritt in den Förderkanal 4 erlauben.

Wichtiger Bestandteil der Vorrichtung ist eine Strahlungseinrichtung bzw. Heizeinrichtung 9, mit der eine Strahlung (im gegebenen Falle auch eine Wärmestrahlung) 10 ausgesendet werden kann, die das Ungeziefer 2 abtötet.

Bei der Strahlungseinrichtung 9 handelt es sich bevorzugt um eine Mikrowellen-Quelle. Mikrowellen-erzeugende Elemente sind im Stand der Technik hinlänglich bekannt, z. B. aus Mikrowellenherden.

Im Falle des Einsatzes einer Heizeinrichtung 9 ist zumeist an eine Heizspirale gedacht, die als ohmscher Widerstand entsprechend erwärmt wird, so dass die Wärmestrahlung das Ungeziefer rasch tötet.

Die Strahlungseinrichtüng bzw. Heizeinrichtung 9 ist beim Ausführungsbeispiel gemäß Fig. 1 zwischen der Ansaugöffnung 6 und dem Filterelement 7 im Bereich des Förderkanals 4 angeordnet. Damit muss das Ungeziefer nach dem Einsaugen durch die Ansaugöffnung 6 und vor dem Herausfiltern durch das Filterelement 7 zwingend die Strahlungseinrichtung bzw. Heizeinrichtung 9 passieren.

Die Strahlungseinrichtung 9 produziert im Betrieb der Vorrichtung 1 ein so starkes Strahlungsfeld, insbesondere ein Mikrowellenfeld, dass das Ungeziefer beim Passieren der Strahlungseinrichtung 9 zuverlässig abgetötet wird. Entsprechend erzeugt die Heizeinrichtung eine Wärmestrahlung, die ebenfalls eine schnelle Abtötung des Ungeziefers sicherstellt.

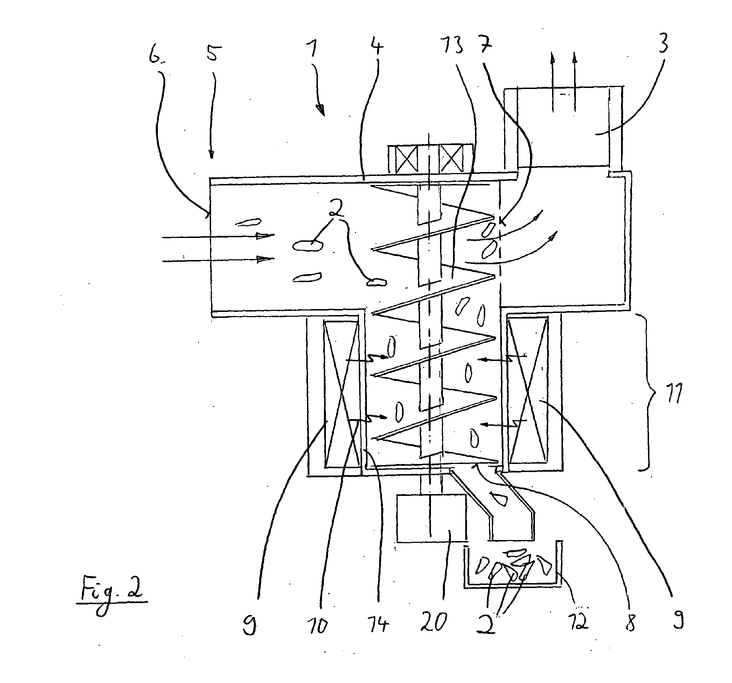

Im Ausführungsbeispiel gemäß Fig. 2 ist eine etwas andere Konfiguration zu erkennen Hierbei handelt es sich um einen etwas kompakteren Aufbau der Vorrichtung 1. An den Förderkanal 4 grenzt hier seitlich ein Bereich 11 an den Förderkanal 4 an, wobei der Kanalabschnitt des Bereichs 11 etwa senkrecht zur Längsachse des Förderkanals 4 verläuft.

In Ergänzung zu dem Ausführungsbeispiel gemäß Fig. 1 ist bei dem Ausführungsbeispiel gemäß Fig. 2 ein erfindungsgemäßes mechanisches Förderelement 13 in Form einer Schnecke 13 vorgesehen. Die Längsachse der Schnecke 13 steht vorliegend senkrecht auf der Längsachse des Förderkanals 4. Die Schnecke 13 kann von einem Motor 20 drehangetrieben werden. Bei Antrieb fördert sie Ungeziefer 2 in Fig. 2 nach unten zu der Abgabeöffnung 8, von wo aus das Ungeziefer 2 in den Auffangbehälter 12 gelangt.

Die Schnecke 13 ist dabei erfindungsgemäß in einem Gehäuse 14 angeordnet. Sowohl der Förderkanal 4 als auch das Gehäuse 14 weisen im Querschnitt eine Kreisform auf. Entsprechend ist auch das Filterelement 7 kreisbogenförmig um die Schnecke 13 herum gebogen ausgebildet. Das hat zur Folge, dass die Schnecke 13 im Betrieb zuverlässig Ungeziefer vom Filterelement 7 nach unten fördert, das sich vor dem Filterelement 7 noch im Luftstrom befindet.

Die Strahlungseinrichtung bzw. Heizeinrichtung 9 ist hier im angrenzenden Bereich 11 angeordnet, so dass das Ungeziefer 2 erst beim Fördern nach unten durch die Schnecke 13 den Bereich passiert, in dem es einer tödlichen Strahlung ausgesetzt ist.

Von Vorteil ist, dass die Passiergeschwindigkeit des Ungeziefers 2 bei Passieren der Strahlungseinrichtung bzw. Heizeinrichtung 9 durch die Schneckenrotation vorgegeben ist. Damit kann sichergestellt werden, dass die Strahlung in jedem Falle ausreicht, um das Ungeziefer abzutöten.

Nicht näher dargestellt ist, dass die gesamte Vorrichtung 1 natürlich so abgeschirmt sein muss, dass Strahlung - egal, ob Mikrowellenstrahlung oder Wärmestrahlung -, die die Strahlungseinrichtung bzw. Heizeinrichtung 9 emittiert, nicht nach außen gelangen kann. Entsprechende Lösungen sind im Stand der Technik beispielsweise aus der Mikrowellenherd-Technologie bekannt; insoweit wird hierauf Bezug genommen. Ansonsten ist eine thermische Isolation vorgesehen, um insbesondere beim Einsatz einer Heizeinrichtung sicherzustellen, dass die Vorrichtung an ihrer äußeren Oberfläche nicht zu heiß wird.

Der Förderkanal 4 ist zu diesem Zweck vorzugsweise aus metallischem Material gefertigt, so dass elektromagnetische Wellen das Innere des Kanals nicht verlassen können. Der Abschirmung dienen auch die Sperrelemente 15, 16, die aufgrund ihrer beschriebenen Ausgestaltung Strahlung im Inneren des Kanals 4 zurückhalten.

Die Wahl der Feldstärke des elektromagnetischen Feldes der Strahlungseinrichtung, insbesondere der Feldstärke der Mikrowellenstrahlung, bzw. der Heizleistung der Heizeinrichtung 9 wird so eingestellt, dass das Ungeziefer 2 in sehr kurzer Zeit erhitzt und damit abgetötet werden kann.

Die gesamte Vorrichtung 1 kann in rucksackähnlicher Weise getragen werden, wozu dann entsprechende Trageriemen an der Vorrichtung angeordnet werden bzw. die Vorrichtung dann in einem entsprechenden tragbaren Gehäuse platziert wird.

An die Ansaugöffnung 6 wird dann ein flexibles Staubsaugerrohr in bekannter Weise angekoppelt, so dass das Ungeziefer einfach aufgesaugt werden kann.

### Bezugszeichenliste:

- 1: Vorrichtung
- 2: Ungeziefer
- 3: Einrichtung zur Erzeugung einer Luftströmung
- 4: Förderkanal
- 5: Ende des Förderkanals
- 6: Ansaugöffnung
- 7: Filterelement
- 8: Abgabeöffnung
- 9: Strahlungseinrichtung / Heizeinrichtung (Mikrowellen-Quelle / Heizelement)
- 10: Strahlung
- 11: an den Förderkanal angrenzender Bereich
- 12: Auffangbehälter
- 13: Förderelement (Schneckenförderer)
- 14: Gehäuse
- 15: Sperrelement
- 16: Sperrelement
- 17: Ende des Förderkanals
- 18: Lamelle
- 19: Feder
- 20: Motor

## Patentansprüche

1. Vorrichtung (1) zur Vernichtung von Ungeziefer (2), die aufweist:
- eine Einrichtung (3) zur Erzeugung einer Luftströmung in einem Förderkanal (4), wobei der Förderkanal (4) an einem Ende (5) eine Ansaugöffnung (6) für Ungeziefer (2) aufweist,
- ein Filterelement (7), das im Förderkanal (4) angeordnet ist, wobei das Filterelement (7) ausgebildet ist, um Ungeziefer (2) zurückzuhalten und Luft passieren zu lassen, und wobei im Bereich des Filterelements (7) eine Abgabeöffnung (8) für Ungeziefer (2) vorhanden ist, und
- mindestens eine Strahlungseinrichtung und/oder mindestens eine Heizeinrichtung (9) zum Aussenden einer das Ungeziefer (2) abtötenden Strahlung (10), wobei die Strahlungseinrichtung und/oder die Heizeinrichtung (9) zwischen der Ansaugöffnung (6) und dem Filterelement (7) entlang des Förderkanals (4) oder in einem hieran angrenzenden Bereich (11) angeordnet ist,
**dadurch gekennzeichnet, dass**
zwischen der Ansaugöffnung (6) und dem Filterelement (7) ein Förderelement (13) angeordnet ist, das zur Förderung von Ungeziefer (2) zur Abgabeöffnung (8) ausgebildet ist, und dass das Förderelement (13) als mechanisches Förderelement in Form einer Förderschnecke ausgebildet ist, die in einem Gehäuse (14) angeordnet ist.

2. Vorrichtung nach Anspruch 1, **dadurch gekennzeichnet, dass** die Strahlungseinrichtung (9) ein elektromagnetische Wellen erzeugendes Element ist.

3. Vorrichtung nach Anspruch 2, **dadurch gekennzeichnet, dass** die Strahlungseinrichtung (9) ein Mikrowellen erzeugendes Element ist.

4. Vorrichtung nach Anspruch 1, **dadurch gekennzeichnet, dass** die Strahlungseinrichtung (9) eine Rotlicht emittierende Lampe ist.

5. Vorrichtung nach einem der Ansprüche 1 bis 4, **dadurch gekennzeichnet, dass** die Heizeinrichtung (9) ein ohmscher Widerstand, insbesondere in Form einer Heizspirale, ist.

6. Vorrichtung nach einem der Ansprüche 1 bis 5, **dadurch gekennzeichnet, dass** die Einrichtung (3) zur Erzeugung einer Luftströmung eine Staubsauger-Saugeinheit ist.

7. Vorrichtung nach einem der Ansprüche 1 bis 6, **dadurch gekennzeichnet, dass** das Filterelement (7) als Lochblech ausgebildet ist, wobei das Lochblech vorzugsweise Bohrungen aufweist, die einen Durchmesser zwischen 1 mm und 4 mm haben.

8. Vorrichtung nach einem der Ansprüche 1 bis 7, **dadurch gekennzeichnet, dass** im Bereich der Abgabeöffnung (8) für Ungeziefer (2) ein Auffangbehälter (12) für Ungeziefer (2) angeordnet ist.

9. Vorrichtung nach einem der Ansprüche 1 bis 8, **dadurch gekennzeichnet, dass** die Förderschnecke aus keramischem Material oder aus Glas besteht.

10. Vorrichtung nach einem der Ansprüche 1 bis 9, **dadurch gekennzeichnet, dass** das Förderelement (13) das Ungeziefer (2) in eine Richtung quer zur Strömungsrichtung der Luftströmung im Förderkanal (4) fördert.

11. Vorrichtung nach einem der Ansprüche 1 bis 10, **dadurch gekennzeichnet, dass** die Strahlungseinrichtung und/oder die Heizeinrichtung (9) um das Förderelement (13) herum angeordnet ist.

12. Vorrichtung nach einem der Ansprüche 1 bis 11, **dadurch gekennzeichnet, dass** sie als mobile Einheit ausgebildet ist, wobei sie vorzugsweise Riemen zum Tragen auf dem Rücken nach Art eines Rucksacks aufweist.

13. Vorrichtung nach einem der Ansprüche 1 bis 12, **dadurch gekennzeichnet, dass** sie als stationäre Einheit ausgebildet ist.

14. Vorrichtung nach Anspruch 13, **dadurch gekennzeichnet, dass** sie Bestandteil einer Einbaustaubsaugeranlage ist.

15. Vorrichtung nach einem der Ansprüche 1 bis 14, **dadurch gekennzeichnet, dass** die Ansaugöffnung (6) zum Anschluss eines flexiblen Staubsaugerschlauchs ausgebildet ist.

## Claims

1. Apparatus (1) for destroying vermin (2), comprising:
- a device (3) for the generation of an airflow in a conveying channel (4), wherein the conveying channel (4) has an intake opening (6) for vermin (2) at one end (5),
- a filter element (7) which is arranged in the conveying channel (4), wherein the filter element (7) is designed to detain vermin (2) and to allow air to pass and wherein a disposal opening (8) for vermin (2) is arranged in the area of the filter element (7) and
- at least one radiation device and/or at least one heating device (9) for emitting a radiation (10) which dispatches the vermin (2), wherein the radiation device and/or the heating device (9) is arranged between the intake opening (6) and the filter element (7) along the conveying channel (4) or in an area (11) abutting on the same,
**characterized in that**
a conveying element (13) is arranged between the intake opening (6) and the filter element (7), which conveying element (13) is designed for conveying of vermin (2) to the disposal opening (8), and that the conveying element (13) is designed as a mechanical conveying element in the form of a screw conveyor, which is arranged in a housing (14).

2. Apparatus according to claim 1, **characterized in that** the radiation device (9) is an element which generates electromagnetic waves.

3. Apparatus according to claim 2, **characterized in that** the radiation device (9) is an element which generates microwaves.

4. Apparatus according to claim 1, **characterized in that** the radiation device (9) is a lamp which emits red light.

5. Apparatus according to one of claims 1 till 4, **characterized in that** the heating device (9) is an ohmic resistance, especially in the form of a heating coil.

6. Apparatus according to one of claims 1 till 5, **characterized in that** the device (3) for the generation of an airflow is a suction unit of a vacuum cleaner.

7. Apparatus according to one of claims 1 till 6, **characterized in that** the filter element (7) is designed as a perforated plate, wherein the perforated plate preferably has holes which have a diameter between 1 mm and 4 mm.

8. Apparatus according to one of claims 1 till 7, **characterized in that** a collection container (12) for vermin (2) is arranged in the area of the disposal opening (8) for vermin (2).

9. Apparatus according to one of claims 1 till 8, **characterized in that** the screw conveyor consists of ceramic material or of glass.

10. Apparatus according to one of claims 1 till 9, **characterized in that** the conveying element (13) conveys the vermin (2) in a direction transverse to the flow direction of the airflow in the conveying channel (4).

11. Apparatus according to one of claims 1 till 10, **characterized in that** the radiation device and/or the heating device (9) is arranged around the conveying element (13).

12. Apparatus according to one of claims 1 till 11, **characterized in that** it is designed as a mobile unit, wherein it preferably comprises straps for carrying at the back like a backpack.

13. Apparatus according to one of claims 1 till 11, **characterized in that** it is designed as a stationary unit.

14. Apparatus according to claim 13, **characterized in that** it is part of a central vacuum cleaning device.

15. Apparatus according to one of claims 1 till 14, **characterized in that** the intake opening (6) is designed for the connection of a flexible hose of a vacuum cleaner.

## Revendications

1. Appareillage (1) pour détruire les parasites (2) qui présente :
- un dispositif (3) pour générer un courant d'air dans un conduit de transport (4), le conduit de transport (4) présentant à une extrémité (5) une ouverture de sortie (6) pour les parasites (2),
- un élément filtrant (7) qui est disposé dans le conduit de transport (4), l'élément filtrant (7) étant configuré pour retenir les parasites (2) et pour laisser passer l'air, et une ouverture de dégagement (8) pour les parasites (2) étant présente dans la zone de l'élément filtrant (7), et
- au moins un dispositif d'irradiation et/ou au moins un dispositif de chauffage (9) pour émettre un rayonnement (10) mortel pour les parasites (2), le dispositif d'irradiation et/ou le dispositif de chauffage (9) étant disposé(s) entre l'ouverture de sortie (6) et l'élément filtrant (7) le long du conduit de transport (4) ou dans une zone (11) juxtaposée à celui-ci,
**caractérisé en ce que**
un élément de transport (13) est disposé entre l'ouverture de sortie (6) et l'élément filtrant (7), lequel est configuré pour transporter les parasites (2) vers l'ouverture de dégagement (8), et que l'élément de transport (13) est réalisé sous la forme d'un élément de transport mécanique sous la forme d'une vis sans fin de transport qui est disposée dans un boîtier (14).

2. Appareillage selon la revendication 1, **caractérisé en ce que** le dispositif d'irradiation (9) est un élément qui génère des ondes électromagnétiques.

3. Appareillage selon la revendication 2, **caractérisé en ce que** le dispositif d'irradiation (9) est un élément qui génère des microondes.

4. Appareillage selon la revendication 1, **caractérisé en ce que** le dispositif d'irradiation (9) est une lampe qui émet de la lumière infrarouge.

5. Appareillage selon l'une des revendications 1 à 4, **caractérisé en ce que** le dispositif de chauffage (9) est une résistance ohmique, notamment sous la forme d'un serpentin chauffant.

6. Appareillage selon l'une des revendications 1 à 5, **caractérisé en ce que** le dispositif (3) pour générer un courant d'air est une unité d'aspiration d'aspirateur.

7. Appareillage selon l'une des revendications 1 à 6, **caractérisé en ce que** l'élément filtrant (7) est réalisé sous la forme d'une tôle perforée, la tôle perforée présentant de préférence des ouvertures qui ont un diamètre entre 1 mm et 4 mm.

8. Appareillage selon l'une des revendications 1 à 7, **caractérisé en ce que** dans la zone de l'ouverture de dégagement (8) pour les parasites (2) est disposé un récipient collecteur (12) pour les parasites (2).

9. Appareillage selon l'une des revendications 1 à 8, **caractérisé en ce que** la vis sans fin de transport se compose de matériau céramique ou de verre.

10. Appareillage selon l'une des revendications 1 à 9, **caractérisé en ce que** l'élément de transport (13) transporte les parasites (2) dans une direction transversale par rapport au sens de circulation du courant d'air dans le conduit de transport (4).

11. Appareillage selon l'une des revendications 1 à 10, **caractérisé en ce que** le dispositif d'irradiation et/ou le dispositif de chauffage (9) est (sont) disposé(s) autour de l'élément de transport (13).

12. Appareillage selon l'une des revendications 1 à 11, **caractérisé en ce qu'**il est réalisé sous la forme d'une unité mobile, laquelle présente de préférence des sangles pour être portée sur le dos à la manière d'un sac à dos.

13. Appareillage selon l'une des revendications 1 à 12, **caractérisé en ce qu'**il est réalisé sous la forme d'une unité fixe.

14. Appareillage selon la revendication 13, **caractérisé en ce qu'**il fait partie intégrante d'une installation d'aspiration intégrée.

15. Appareillage selon l'une des revendications 1 à 14, **caractérisé en ce que** l'ouverture de sortie (6) est configurée pour le raccordement d'un tuyau souple d'aspirateur.
